# EUROPÄISCHE PATENTSCHRIFT

(11) **EP 1 659 763 B1**
(45) Veröffentlichungstag und Bekanntmachung des Hinweises auf die Patenterteilung: **23.01.2008**
(21) Anmeldenummer: 05022476.5
(22) Anmeldetag: 14.10.2005
(51) Int. Cl.: H04L 29/12

(54) **Verfahren zur systematischen Vergabe von Adressen an Nutzer von Kommunikationsnetzen**
Method for allocation of addresses to network users
Procédé pour la délivrance d'adresses à des utilisateurs d'un réseau

(30) Priorität: 20.11.2004 DE 102004056181
(43) Veröffentlichungstag der Anmeldung: 24.05.2006
(73) Patentinhaber: Deutsche Telekom AG, 53113 Bonn (DE)
(72) Erfinder: Hasemann, Jörg-Michael, Dr., 27321 Emtinghausen (DE)

(56) Entgegenhaltungen:
- US-A1- 2002 038 380
- US-A1- 2003 053 441
- US-A1- 2003 079 017
- US-B1- 6 718 387

## Beschreibung

Die Erfindung betrifft ein Verfahren zur systematischen Vergabe von Adressen an Nutzer von leitungsvermittelten und/oder paketvermittelten Kommunikationsnetzen.

Weltumspannende Rechner- und Telekommunikationsnetze sind heutzutage die technische Plattform auf der mittels unterschiedlicher elektronischer Endgeräte Kommunikationsvorgänge durchgeführt werden können. Hierbei hat sich das Internet Protocol (IP) als Standardprotokoll zur Bewerkstelligung von Kommunikationsvorgängen in Rechner- und Telekommunikationsnetzwerken durchgesetzt. IP ist ein verbindungsloses Protokoll. Ein verbindungsloses Protokoll kann nicht garantieren, daß ein Datenpaket überhaupt beim Empfänger ankommt. IP garantiert nicht, daß von einem einmal abgeschickten Datenpaket nur eine Kopie beim Empfänger ankommt oder daß in einer bestimmten Reihenfolge abgeschickte Datenpakete auch wieder in dieser Reihenfolge empfangen werden. IP-Pakete laufen über mehrere Zwischenstationen, bis sie am Zielrechner ankommen. Bricht irgendwann während der Übertragung ein Übertragungsweg zusammen, so wird ein neuer Weg zum Ziel gesucht und benutzt. Bezüglich der Adressierung von IP-Adressen sind derzeit die beiden Standards IPv4 und IPv6 in Verwendung.

Um einzelnen Endnutzern bzw. Kunden Zugang zu Informationsquellen über Rechner- und Telekommunikationsnetze zu ermöglichen, sind Internet Service Provider (ISP) notwendig, die technisch diesen Netzzugang bereitstellen. Hierzu weist der ISP dem Kunden in der Regel für die Zeit der Internet-Nutzung eine eindeutige IP-Adresse zu, damit dieser aus dem Internet heraus adressierbar ist, das heißt Inhalte bzw. Dienste und die dazugehörigen Daten aus dem Internet empfangen kann. Dem ISP steht hierzu in der Regel ein Pool an IP-Adressen zur Verfügung, aus dem der ISP die IP-Adressen für seine Kunden auswählt. Nach Ende der Internet-nutzung, beispielsweise nach Abbau der Verbindung bzw. nach einem Timeout, wird diese IP-Adresse dem Pool zurückgegeben und kann für andere Kunden wiederverwendet werden.

Aus der US 2002/0038380 A1 ist ein Verfahren zur systematischen Vergabe von Adressen an Nutzer von Kommunikationsnetzen bekannt. Bei diesem aus der US 2002/0038380 A1 bekannten Verfahren wird mittels Rundungs- und Maskierungsprozeduren ein spezielles hierarchisch-periodisches Strukturmuster im Adreßraum geschaffen, welches eine effiziente Netzwerkverwaltung ermöglicht.

Die US 2003/0079017 A1 offenbart ein Verfahren zur Verwaltung und Vergabe von IP-Adressen für drahtlose mobile Endgeräte. Bei dem Verfahren gemäß der US 2003/0079017 A1 soll durch eine spezielle dynamische vorausschauende Adreßraumanalyse und dynamische Aktualisierung verschiedener Adreßpools mit Adressen unterschiedlich hoher Priorität ein möglichst schneller Datentransport in einem zellularen Kommunikationsnetz gewährleistet werden.

Um eine ausreichende Anzahl an IP-Adressen zur Verfügung zu stellen werden IP-Adressen typischerweise dynamisch vergeben. Dieses Verfahren wird beim Dial-In beim Internet Service Provider (ISP) verwendet. Der Benutzer bekommt für die Dauer einer Verbindung eine IP-Adresse zugeteilt. Das bekannteste dynamische Vergabeverfahren heißt DHCP (dynamic host configuration protocol).

Ein weiteres Verfahren für die Zuteilung von IP-Adressen ist das Network Address Translation (NAT). Hierbei wird über ein Gateway im Internet eine andere IP-Adresse verwendet als im lokalen Netz. Diese Umsetzung erlaubt, beispielsweise ein komplettes privates Netz mit einer einzigen externen IP-Adresse zu betreiben.

In Anbetracht der Tatsache, daß abzusehen ist, daß der durch IPv4 adressierbare Adreßraum aufgrund der stark ansteigenden Nutzung des Internets und des dadurch einhergehenden Bedarfs an IP-Adressen knapp wird, wird in den nächsten Jahren eine Migration zu IPv6-Adressen stattfinden. Durch die Einführung und die Weiterentwicklung des IP-Protokolls durch IPv6 wird ein erweiterter Adreßraum geschaffen.

Der Erfindung liegt die Aufgabe zugrunde, ein Verfahren zur systematischen Vergabe von Adressen an Nutzer bereitzustellen, das im Ergebnis eine technisch besonders einfache Filterung bestimmter Benutzerklassen in Bezug auf die Beobachtung des Verhaltens im Netz und in Bezug auf das direkte Ansprechen gefilterter Benutzerklassen ermöglicht.

Erfindungsgemäß wird diese Aufgabe gelöst durch ein Verfahren nach Anspruch 1.

Ein Kerngedanke der Erfindung ist darin zu sehen, daß anhand der in der Adresse verschlüsselten Information auf das Profil eines Kunden geschlossen werden kann. Dies wiederum kann zur profilbasierten Datenaufbereitung, z.B. zum bevorrechtigten oder beschleunigten Datentransport, oder für individualisierte Dienste anderer Art genutzt werden.

Ein weiterer Vorteil des erfindungsgemäßen Verfahrens besteht darin, daß der zur Verfügung stehende Adreßraum des Kommunikationsnetzes hinsichtlich der zeitlichen Vergabe optimiert ausgenutzt werden kann, da auf der Grundlage des erfindungsgemäßen Verfahrens Adreßvergabestrategien konzipiert werden können.

Vorteilhafte und bevorzugte Weiterbildungen des erfindungsgemäßen Verfahrens sind Gegenstand der Unteransprüche 2 bis 4.

Einige vorteilhafte und bevorzugte Ausführungsbeispiele des erfindungsgemäßen Verfahrens werden nachfolgend mit besonderem Bezug auf das Internet als den Ausführungsbeispielen zugrundeliegendes Kommunikationsnetz näher beschrieben.

Nach dem Verfahren steht dem ISP ein fortlaufender Adreßraum von IP-Start bis IP-Ende für die Vergabe von IP-Adressen zur Verfügung. In diesem Adreßraum werden Merkmale M1 bis MN verschlüsselt in die IP-Adresse eingetragen. Die Merkmale M1 bis MN werden abhängig davon, ob die Merkmale vorhanden sind oder nicht, auf ein n Bit langes Bitmuster bn, ..., b3, b2, b1 abgebildet. Ein gesetztes Bit bedeutet dabei, daß das entsprechende Merkmal vorhanden ist.

Bei der Vergabe von IP-Adressen wird nun zunächst geprüft, ob obige Merkmale vorhanden sind. Im nächsten Schritt wird obiges Bitmuster erzeugt und die nächste verfügbare IP-Adresse aus dem obigen IP-Adreßpool, bei der die letzten n Bits dem erzeugten Bitmuster entsprechen, zugeteilt.

Ein Nachteil des Verfahrens in der beschriebenen Form liegt darin, daß bei ungleicher Verteilung der Merkmale der bereitgestellte IP-Adreßraum unter Umständen nur sehr ineffizient genutzt wird. Eine erfindungsgemäße Erweiterung des Verfahrens ist, daß die Wahrscheinlichkeit einer Merkmalskombination ermittelt oder geschätzt wird.

Unter den Annahmen der bereits durchgeführten Verfahrensschritte würde jeder Merkmalskombination eine Wahrscheinlichkeit zugewiesen werden. Die Summe über alle Wahrscheinlichkeiten aller Merkmalskombinationen ergibt 1 und beschreibt den gesamten Adreßraum. Der gesamte Adreßraum wird nun anteilig entsprechend der festgestellten Wahrscheinlichkeiten und in der durch das Bitmuster vorgegebenen Reihenfolge aufgeteilt und den jeweiligen Bitmustern zugeteilt. Bei der Vergabe von IP-Adressen wird nun zunächst geprüft, ob obige Merkmale vorhanden sind. Im nächsten Schritt wird obiges Bitmuster erzeugt und die nächste verfügbare IP-Adresse aus dem obigen aufgeteilten und dem Bitmuster zugeteilten (Unter-) IP-Adreßpool zugeteilt. Diese Erweiterung hat den Vorteil einer sehr viel effizienteren IP-Adreßraumnutzung, insbesondere bei nicht gleichverteilten Merkmalen.

Mit der durch das oben beschriebene Verfahren gegebenen Möglichkeit Merkmale des Kunden in die IP-Adresse hineinzukodieren eröffnen sich neue Wege zur Erhebung von Nutzungscharakteristiken von Kundensegmenten des ISP.

Der ISP segmentiert seine Kundenklientel nach Kundensegmenten, z.B. unter Zuhilfenahme seiner Kundenkartei / seines CRM (Customer Relationship Management) - Systems, zusätzlich ggf. unter Berücksichtigung von Information über seine Kunden, die der ISP von Wirtschaftsauskunfteien o.ä. bezieht. Die Zugehörigkeit zu Kundensegmenten wird als Merkmal bzw. Merkmale bei der Vergabe von IP-Adressen in die IP-Adresse hineinkodiert. An den Übergabepunkten zwischen dem Netz des ISP und dem Internet werden IP-Paketfilter installiert, die die IP-Datenpakete nach ihrer Absenderadresse (outgoing Traffic) und ihrer Zieladresse (incoming Traffic) analysieren. Ferner werden in den Übergabepunkten, die IP-Datenpakete anhand der in die IP-Adressen hineinkodierten Informationen den Kundensegmenten zugeordnet und diesbezügliche weitere Informationen erhoben. Denkbar diesbezüglich sind die kundensegmentspezifische Erhebung des Datenvolumens, Informationen über die zeitliche Nutzung des Internets durch den einzelnen Kunden, Informationen über die Nutzung bestimmter Dienste durch den einzelnen Kunden, Informationen über die bevorzugten Internet-Adressen mit denen der einzelne Kunde in Kontakt tritt, etc.

## Patentansprüche

1. Verfahren zur systematischen Vergabe von Adressen an Nutzer von leitungsvermittelten und/oder paketvermittelten Kommunikationsnetzen anhand von vordefinierten Klassifizierungsmerkmalen, **gekennzeichnet durch** folgende Schritte:
a) Festlegen von n nutzerbezogenen Merkmalen, wobei n eine natürliche Zahl größer als 1 ist und Darstellung der n Merkmale als geordnete Merkmalsketten der Länge n,
b) Wichtung der in Schritt a) definierten geordneten Merkmalsketten der Länge n und/oder von in disjunkten Gruppen zusammengefaßten geordneten Merkmalsketten der Länge n **durch** Wahrscheinlichkeiten,
c) Klassifizierung des Adreßraumes des Kommunikationsnetzes anhand der in Schritt b) **durch** Wahrscheinlichkeiten gewichteten Merkmalsketten der Länge n und/oder der **durch** Wahrscheinlichkeiten gewichteten disjunkten Gruppen zusammengefaßter Merkmalsketten der Länge n,
d) eineindeutige Abbildung der in Schritt a) definierten Merkmalsketten der Länge n auf ein Bitmuster der Länge n und
e) nutzermerkmalsspezifische Auswahl und Vergabe von Adressen aus dem in Schritt c) geschaffenen Adreßraum unter Verwendung des im Schritt d) definierten Bitmusters der Länge n an Nutzer.

2. Verfahren nach einem der vorhergehenden Ansprüche, **dadurch gekennzeichnet, daß** das Kommunikationsnetz das Internet und/oder ein IP-Netzwerk und/oder ein TCP/IP-Netzwerk und/oder ein UDP/IP-Netzwerk und/oder ein GPRS-Netzwerk und/oder ein UMTS-Netzwerk und/oder ein ISDN-Netzwerk und/oder ein Stromleitungsnetz ist.

3. Verfahren nach einem der vorhergehenden Ansprüche, **dadurch gekennzeichnet, daß** die Wahrscheinlichkeiten mit Hilfe von Tabellen und/oder mit Hilfe eines neuronalen Netzes bestimmt werden.

4. Verfahren nach einem der vorhergehenden Ansprüche, **dadurch gekennzeichnet, daß** als Merkmale quantitative und/oder qualitative nutzerbezogene Merkmale verwendet werden.

## Claims

1. Method for the systematic assignment of addresses to users of circuit-switched and/or packet-switched communications networks on the basis of predefined classification characteristics, **characterized by** the following steps:
a) Definition of n user-related characteristics, where n is a natural number greater than 1, and representation of the n characteristics as ordered chains of characteristics of length n,
b) Weighting of the chains of characteristics of length n defined in step a) and/or of chains of characteristics of length n combined into disjoint groups based on probabilities,
c) Classification of the address space of the communications network on the basis of the chains of characteristics of length n that were weighted based on probabilities in step b), and/or on the basis of the chains of characteristics of length n combined into disjoint groups that were weighted based on probabilities in step b),
d) Unambiguous mapping of the chains of characteristics of length n that were defined in step a) onto a bit pattern of length n, and
e) User-characteristic-specific selection and assignment to users of addresses from the address space created in step c) using the bit pattern of length n defined in step d).

2. Method according to any one of the preceding claims, **characterized in that** the communications network is the Internet and/or an IP network and/or a TCP/IP network and/or a UDP/IP network and/or a GPRS network and/or a UMTS network and/or an ISDN network and/or a power distribution network.

3. Method according to any one of the preceding claims, **characterized in that** the probabilities are determined with the aid of tables and/or with the aid of a neural network.

4. Method according to any one of the preceding claims, **characterized in that** quantitative and/or qualitative user-related characteristics are used as characteristics.

## Revendications

1. Procédé d'attribution systématique d'adresses à des utilisateurs de réseaux de communication à commutation de circuits et/ou à commutation de paquets moyennant des caractéristiques de classification prédéfinies, **caractérisé par** les étapes suivantes :
a) détermination de n caractéristiques relatives à l'utilisateur, n étant un nombre naturel supérieur à 1, et représentation des n caractéristiques comme des chaînes de caractéristiques ordonnées de longueur n,
b) pondération par des probabilités des chaînes de caractéristiques ordonnées de longueur n définies à l'étape a) et/ou de chaînes de caractéristiques ordonnées de longueur n réunies dans des groupes disjoints,
c) classification de l'espace d'adressage du réseau de communication moyennant les chaînes de caractéristiques de longueur n pondérées par des probabilités à l'étape b) et/ou les groupes disjoints de chaînes de caractéristiques réunies de longueur n pondérés par des probabilités,
d) application biunivoque des chaînes de caractéristiques de longueur n définies à l'étape a) sur une configuration binaire de longueur n et
e) sélection et attribution, spécifiques aux caractéristiques relatives à l'utilisateur, d'adresses provenant de l'espace d'adressage créé à l'étape c), à des utilisateurs en utilisant la configuration binaire de longueur n définie à l'étape d).

2. Procédé selon l'une des revendications précédentes, **caractérisé en ce que** le réseau de communication est l'internet et/ou un réseau IP et/ou un réseau TCP/IP et/ou un réseau UDP/IP et/ou un réseau GPRS et/ou un réseau UMTS et/ou un réseau ISDN et/ou un réseau de lignes électriques.

3. Procédé selon l'une des revendications précédentes, **caractérisé en ce que** les probabilités sont déterminées à l'aide de tableaux et/ou à l'aide d'un réseau neuronal.

4. Procédé selon l'une des revendications précédentes, **caractérisé en ce que** les caractéristiques utilisées sont des caractéristiques quantitatives et/ou qualitatives relatives à l'utilisateur.
